# EUROPÄISCHE PATENTSCHRIFT

(11) **EP 2 152 770 B1**
(45) Veröffentlichungstag und Bekanntmachung des Hinweises auf die Patenterteilung: **13.10.2010**
(21) Anmeldenummer: 08750145.8
(22) Anmeldetag: 07.05.2008
(51) Int. Cl.: C08F 212/08, C08F 4/64, C08F 236/20, C08F 214/00, C08F 216/02, C08F 230/08, C08F 226/00, C08F 257/02, C08L 51/00, C08L 53/00, C08L 53/02, C08F 290/04, C08F 290/06, C08F 293/00, C08G 61/04, C08G 61/08, C08F 8/20, C08F 8/08

(54) **ISOTAKTISCHES POLYSTYROL MIT REAKTIVEN GRUPPEN**
ISOTACTIC POLYSTYRENE HAVING REACTIVE GROUPS
POLYSTYROL ISOTACTIQUE À GROUPES RÉACTIFS

(30) Priorität: 23.05.2007 EP 07108764
(43) Veröffentlichungstag der Anmeldung: 17.02.2010
(73) Patentinhaber: BASF SE, 67056 Ludwigshafen (DE)
(72) Erfinder: STEININGER, Helmut, 67551 Worms (DE); KNOLL, Konrad, 68199 Mannheim (DE); MÜLHAUPT, Rolf, 79117 Freiburg (DE); GALL, Barbara, 79106 Freiburg (DE); PELASCINI, Frederic, F-67540 Ostwald (FR); PFAHLER, Axel, 79100 Freiburg im Breisgau (DE)
(86) Internationale Anmeldenummer: PCT/EP2008/055625
(87) Internationale Veröffentlichungsnummer: WO 2008/141941

(56) Entgegenhaltungen:
- US-A- 4 038 469
- GALL BARBARA T ET AL: "Molecular weight and end group control of isotactic polystyrene using olefins and nonconjugated diolefins as chain transfer agents" MACROMOLECULES, Bd. 41, Nr. 5, 7. Februar 2008 (2008-02-07), Seiten 1627-1633, XP002486982 Washington DC, USA
- BECKERLE K ET AL: "Stereospecific post-metallocene polymerization catalysts: the example of isospecific styrene polymerization" JOURNAL OF ORGANOMETALLIC CHEMISTRY, ELSEVIER-SEQUOIA S.A. LAUSANNE, CH, Bd. 689, Nr. 24, 29. November 2004 (2004-11-29), Seiten 4636-4641, XP004650700 ISSN: 0022-328X
- CAZZANIGA, L.: "Synthesis and Characterization of Isotactic Polystyrene/Polybutadiene Block Copolymers" MACROMOLECULES, Bd. 24, 1991, Seiten 5817-5822, XP002486983 Washington DC, USA

## Beschreibung

Die vorliegende Erfindung betrifft ein Verfahren zur Herstellung von funktionalisiertem isotaktischen Polystyrol, funktionalisiertes isotaktisches Polystyrol, herstellbar nach dem erfindungsgemäßen Verfahren, die Verwendung des erfindungsgemäßen funktionalisierten isotaktischen Polystyrols als Makromonomer, ein Verfahren zur Herstellung eines Makroinitiators, einen Makroinitiator herstellbar nach dem vorstehend genannten Verfahren, die Verwendung des Makroinitiators für die kontrollierte radikalische Polymerisation, die Verwendung des erfindungsgemäßen funktionalisierten isotaktischen Polystyrols als Makromonomer, bevorzugt in der Copolymerisation mit Olefinen, der ROMP mit Cycloolefinen oder zur Kupplung mit Silikonsegmenten, ein Verfahren zur Epoxidierung des erfindungsgemäßen funktionalisierten isotaktischen Polystyrols, epoxidiertes isotaktisches Polystyrol, herstellbar nach dem vorstehend genannten Verfahren sowie ein Verfahren zur Herstellung von weichen thermoplastischen Elastomeren (TPE) durch Metathesepolymerisation des erfindungsgemäßen funktionalisierten isotaktischen Polystyrols mit geeigneten Polymeren, die endständige Doppelbindungen aufweisen, und weiche thermoplastische Elastomere herstellbar nach dem erfindungsgemäßen Verfahren.

Es besteht großes Interesse an strukturell definierten funktionalisierten Polymeren, die zum Beispiel als Makroinitiatoren oder Makromonomere zur Herstellung neuartiger Werkstoffe eingesetzt werden können.

Makroinitiatoren und Makromonomere auf Basis von Polystyrol sind im Stand der Technik bekannt. In der Regel erfordert die Makromonomersynthese einen mehrstufigen Prozess, zum Beispiel anionische Styrolpolymerisation und Kettenabbruch mit funktionalisierenden Reagenzien. Die überwiegende Zahl der anionisch hergestellten Styrolpolymere ist ataktisch.

In Lutz et al., Macromol. Rapid Commun. 2004, 25, 1010 bis 1014 ist die Homopolymerisation von ω-Styryl-Polystyrol-Makromonomeren in Anwesenheit von Titanocen-Katalysatoren offenbart. Die Makromonomere werden durch anionische Styrolpolymerisation und Kettenabbruch hergestellt.

In Lutz et al., Macromol. Symp. 2004, 213, 253 bis 263 ist die Homo- und Copolymerisation von Endgruppen funktionalisierten Polystyrol-Makromonomeren offenbart, wobei kammartige Polymere erhalten werden. Auch in diesem Fall werden die Makromonomere durch anionische Polymerisation und Kettenabbruch mit geeigneten funktionalisierenden Reagenzien hergestellt.

Die anionische Polymerisation von Styrol eignet sich jedoch nicht zur Herstellung von hoch-isotaktischem Polystyrol (siehe Cazzaniga et al. Macromolecules 1989, 22, 4125 bis 4128, Makino et al. Macromolecules 1999, 32, 5712 bis 5714).

Die Herstellung von isotaktischem Polystyrol ist z. B. an Nd-basierten Katalysatoren möglich (Liu et al., J. Polym. Sci. A: Polym. Chem. 1998, 36,1773 bis 1778). Weiterhin ist eine isospezifische Polymerisation von Styrol mit ansa-Zirkonocenkatalysatoren (Arai et al. Olefin Polymerisation, 2000, Vol. 749) sowie mit Nickel-Komplexen (Ascenso et al., Makromolecules 1996, 29, 4172 bis 4179, Crossetti et al., Macromol. Rapid Commun. 1997, 18, 801, Po et al., J. Polym. Sci. A: Polym. Chem. 1998, 36, 2119 bis 2126) möglich. Diese Ansätze sind jedoch durch die nicht vollständige Stereregularität der Produkte sowie durch geringe Molekulargewichte im Falle der Nickel-Katalysatoren limitiert.

Ein weiteres Verfahren zur Herstellung von isotaktischem Polystyrol ist in Proto, Mülhaupt, Okuda et al., J. Am. Chem. Soc. 2003, 125, 4964 bis 4965 offenbart. Darin ist die Herstellung von isotaktischem Polystyrol mittels C₂-symmetrischen Gruppe IV Metall-bis(phenolat)-Katalysatoren offenbart.

Bisher erlangte isotaktisches Polystyrol aufgrund seiner kinetisch stark gehemmten Kristallisation keine kommerzielle Bedeutung, obwohl es mit einer Schmelztemperatur von ca. 220 °C einen interessanten technischen Werkstoff bzw. ein interessantes Ausgangsmaterial zur Herstellung neuartiger Werkstoffe darstellt.

In der Dissertation von H. Ebeling "Katalytische Styrol-Homo- und Copolymerisation und neue Cycloolefinpolymere auf der Basis von 1,3-Cyclohexadien", Freiburg i. Br. 2004, wird die Molekulargewichtsregelung bei der Herstellung von iPS durch katalytische Styrolpolymerisation in Anwesenheit von 1-Hexen untersucht. Des Weiteren sind Copolymere des 1,3-Cyclohexadiens mit Styrol beschrieben. Die Herstellung von funktionalisiertem iPS, das z. B. als Makroinitiator, Makromonomer oder Kupplungsreagenz dienen kann, ist in der Dissertation nicht offenbart.

Aufgabe der vorliegenden Erfindung ist daher die Bereitstellung von hoch-isotaktischem Polystyrol, das als Makroinitiator, Makromonomer oder Kupplungsreagenz zur Herstellung neuartiger Werkstoffe durch weitere Funktionalisierung bzw. weitere Umsetzung dienen kann. Um eine weitere Funktionalisierung bzw. Umsetzung zu ermöglichen, muss das hoch-isotaktische Polystyrol funktionelle Gruppen tragen.

Somit sollen mit der vorliegenden Erfindung stereoreguläre Styrolpolymere bereitgestellt werden, die als Makromonomere, Makroinitiatoren oder Kupplungsreagenzien zur Steuerung molekularer Architekturen geeignet sind. Diese können zur Herstellung neuartiger Copolymere (z. B. Block- oder Pfropfcopolymere) und neuartiger Werkstoffe eingesetzt werden.

Diese Aufgabe wird durch ein Verfahren zur Herstellung von funktionalisiertem isotaktischem Polystyrol gelöst, umfassend den Schritt:
(i) katalytische Polymerisation von Styrol in Anwesenheit mindestens eines isoselektiven metallorganischen Katalysators und mindestens eines C₅-C₃₀-Olefins, das neben der Doppelbindung eine weitere Funktionalisierung aufweist.

Es wurde gefunden, dass der Einbau der C₅-C₃₀-Olefine, die neben der Doppelbindung eine weitere Funktionalisierung aufweisen, im Wesentlichen an den Kettenenden des Polystyrols erfolgt. Im Allgemeinen werden maximal 15 mol-%, bevorzugt maximal 10 mol% besonders bevorzugt maximal 5 mol% der Olefine in die Polystyrolkette eingebaut. Die in dem erfindungsgemäßen Verfahren eingesetzten C₅-C₃₀-Olefine dienen gleichzeitig zur Funktionalisierung sowie zur Kontrolle des Molekulargewichts, in dem sie ein effektives Kettentransferreagenz darstellen.

Die weitere Funktionalisierung des C₅-C₃₀-Olefins ist z. B. eine weitere Doppelbindung, die im Allgemeinen nicht mit der bereits in dem C₅-C₃₀-Olefin vorhandenen Doppelbindung konjugiert ist. Des Weiteren kann es sich bei der weiteren Funktionalisierung um eine OH-Gruppe, Aminogruppe, Halogen, eine Alkylsilylgruppe handeln. Diese funktionellen Gruppen sind im Allgemeinen nicht in Vinylstellung zu der bereits vorhandenen Doppelbindung angeordnet. Bevorzugt ist die bereits vorhandene Doppelbindung des C₅-C₃₀-Olefins an einem Kettenende des Olefins (in α-Position) angeordnet und die weitere funktionelle Gruppe an dem anderen Kettenende des Olefins (in w-Position).

Im Folgenden ist unter dem Ausdruck "C₅-C₃₀-Olefin" ein C₅-C₃₀-Olefin zu verstehen, das neben der bereits vorhandenen Doppelbindung eine weitere Funktionalisierung aufweist, wobei bevorzugte Funktionalisierungen vorstehend genannt sind.

Die Styrolkonzentration beträgt in dem erfindungsgemäßen Verfahren im Allgemeinen 0,1 bis 8 mol/l, bevorzugt 0,5 bis 5 mol/l, besonders bevorzugt 1,0 bis 2,5 mol/l. Die Konzentration des erfindungsgemäß eingesetzten C₅-C₃₀-Olefins ist abhängig von der gewünschten Molmasse und für den Fachmann problemlos zu ermitteln.

Das Molekulargewicht der erfindungsgemäß hergestellten funktionalisierten isotaktischen Polystyrole ist von dem Konzentrationsverhältnis zwischen der Konzentration des eingesetzten C₅-C₃₀-Olefins und der Konzentration von Styrol abhängig. Je größer das Verhältnis c(Olefin)/c(Styrol) ist, desto niedriger ist das Molekulargewicht. Es wurde des Weiteren gefunden, dass die Auswirkungen des Konzentrationsverhältnisses von C₅-C₃₀-Olefin und Styrol auf die Molekulargewichtsverteilung des funktionalisierten isotaktischen Polystyrols gering sind.

Als Katalysator ist grundsätzlich jeder in der katalytischen Polymerisation von Styrol isoselektive metallorganische Katalysator geeignet. Solche isoselektiven metallorganischen Katalysatoren sind üblicherweise Katalysatoren, die eine C₂-Symmetrie aufweisen.

Bevorzugt wird in dem erfindungsgemäßen Verfahren ein C₂-symmetrischer Gruppe IV-Metall-bis(phenolat)-Katalysator eingesetzt. Besonders bevorzugt in dem erfindungsgemäßen Verfahren eingesetzte Katalysatoren weisen die allgemeine Formel I auf: 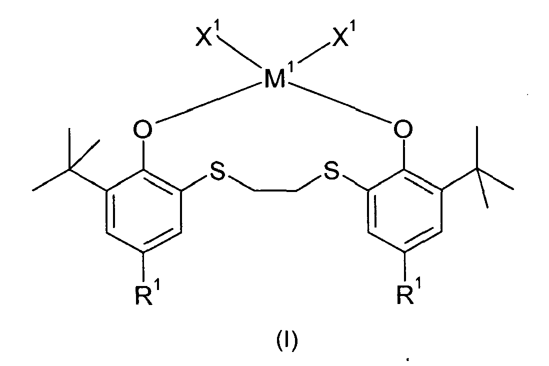 worin M¹, R¹, X¹ in der Formel I bedeuten:
- M¹: Ti, Zr, Hf, bevorzugt Ti;
- R¹: (C₁-C₆)-Alkyl, O-(C₁-C₆)-Alkyl, bevorzugt (C₁-C₆)-Alkyl, O-(C₁-C₄)-Alkyl, be- sonders bevorzugt Methyl, t-Butyl, O-Methyl, ganz besonders bevorzugt t- Butyl;
- X¹: Halogen, O-(C₁-C₄)-Alkyl, Aralkyl, bevorzugt F, Cl, O(ⁱPr)₂, CH₂Ph, beson- ders bevorzugt Cl.

Besonders bevorzugt wird in den erfindungsgemäßen Polymerisationsverfahren ein Katalysator der Formel I eingesetzt. Ganz besonders bevorzugt wird ein Katalysator der Formel I eingesetzt, worin M¹ Ti, X¹ Cl und R¹ Methyl oder t-Butyl bedeutet.

Der Katalysator der Formel I bzw. sein Herstellungsverfahren ist zum Beispiel in Proto, Mülhaupt, Okuda et al. J. Am. Chem. Soc. 2003, 125, 4964 bis 4965 und den darin genannten Verweisen offenbart.

Die Konzentration des in dem erfindungsgemäßen Verfahren eingesetzten Katalysators beträgt im Allgemeinen 10 bis 200 µmol/l, bevorzugt 20 bis 100 µmol/l, besonders bevorzugt 30 bis 80 µmol/l

Im Allgemeinen wird das erfindungsgemäße Polymerisationsverfahren in einem Lösungsmittel durchgeführt. Geeignete Lösungsmittel sind aromatische Kohlenwasserstoffe, zum Beispiel Toluol, oder halogenierte Kohlenwasserstoffe, z. B. Dichlormethan. Bevorzugt wird das erfindungsgemäße Polymerisationsverfahren in Toluol als Lösungsmittel durchgeführt. Grundsätzlich ist es ebenfalls möglich, die Polymerisation in Styrol ohne Zusatz eines weiteren Lösungsmittels durchzuführen.

Die Reaktionstemperatur beträgt in dem erfindungsgemäßen Verfahren im Allgemeinen 20 bis 80 °C, bevorzugt 20 bis 60 °C.

Das in dem erfindungsgemäßen Verfahren eingesetzte C₅-C₃₀-Olefin, das neben der Doppelbindung eine weitere Funktionalisierung aufweist, weist bevorzugt die allgemeinen Formeln IIIa oder IIIb auf: 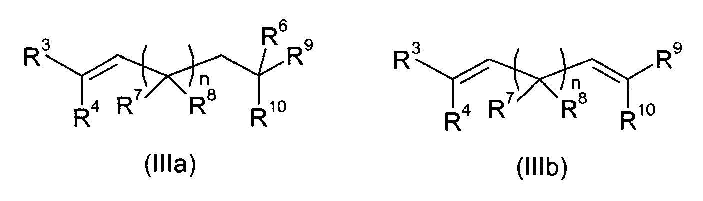 worin bedeuten:
- R³, R⁴, R¹⁰, R⁷, R⁸, R⁹: H, (C₁-C₆)-Alkyl, bevorzugt H, (C₁-C₄)-Alkyl, besonders bevorzugt H, Methyl, ganz besonders bevorzugt H;
- R⁶: OH, Amino, Halogen oder Alkylsilyl, bevorzugt OH, Halogen oder Alkylsilyl
- n: 2 bis 10, bevorzugt 2 bis 8, besonders bevorzugt 4 bis 8.

Geeignete Aminogruppen sind NR'R"-Gruppen, worin R' und R" unabhängig voneinander H oder C₁-C₆-Alkyl bedeuten.

Geeignete Halogengruppen sind F, Cl, Br, I, bevorzugt Cl oder Br.

Geeignete Alkylsilylgruppen sind SiR"'R""R""'-Gruppen, worin R"', R"" und R""' unabhängig voneinander C₁-C₆-Alkyl bedeuten.

Ganz besonders bevorzugt sind in dem C₅-C₃₀-Olefin mit mindestens einer endständigen, nicht konjugierten Doppelbindung der Formeln IIIa oder IIIb die Reste R³, R⁴, R¹⁰, R⁷, R⁸ und R⁹ H und n ist 4 bis 8, R⁶ in dem 1-Olefin der Formel IIIa ist ganz besonders bevorzugt OH.

In einer Ausführungsform des erfindungsgemäßen Verfahrens werden somit 1-Olefine mit 5 bis 30 Kohlenstoffatomen eingesetzt, die mit einer OH-Gruppe, Aminogruppe, Halogen oder einer Alkylsilylgruppe substituiert sind.

Dabei werden funktionalisierte isotaktische Polystyrole erhalten, die mindestens an einem Kettenende eine Gruppe IVa aufweisen:

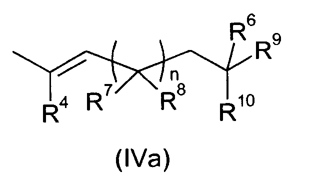

Bevorzugte 1-Olefine sind 1-Olefine mit 8 bis 12 Kohlenstoffatomen, z. B. Dec-1-en-10-ol, 10-Bromo-dec-1-en, 10-Chloror-dec-1-en, Undec-1-en-11-ol, 11-Bromo-undec-1-en, 11-Chloro-undec-1-en oder 11-Alkylsilyl-undec-1-en.

In einer weiteren Ausführungsform des erfindungsgemäßen Verfahrens werden C₅-C₃₀-Diene mit nicht konjugierten Doppelbindungen eingesetzt. Dabei wird isotaktisches Polystyrol erhalten, das an mindestens einem Kettenende eine Vinylgruppe aufweist (vinyl-terminiertes isotaktisches Polystyrol). Bevorzugt weist das funktionalisierte Polystyrol in dieser Ausführungsform an mindestens einem Kettenende eine Gruppe IVb auf:

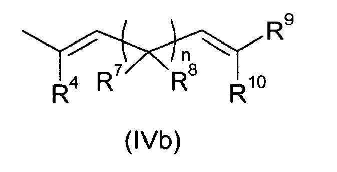

Bevorzugte C₅-C₃₀-Diene mit nicht konjugierten Doppelbindungen sind Diene mit 8 bis 12 Kohlenstoffatomen, z. B. 1,7-Octadien, 1,8-Nonadien, 1,9-Decadien, 1,10-Undecadien und 1,11-Dodecadien.

Das vorstehend beschriebene erfindungsgemäße Polymerisationsverfahren umfassend den Schritt (i) zeichnet sich dadurch aus, dass mit Hilfe des erfindungsgemäßen Verfahrens Makromonomere, Makroinitiatoren, Block- und Propfcopolymere sowie anorganische/organische Hydride mit stereoregulären, eng verteilten Polystyrolsegmenten zugänglich gemacht werden können.

Mit Hilfe des erfindungsgemäßen Verfahrens sind somit neuartige funktionalisierte isotaktische Polystyrole zugänglich.

Ein weiterer Gegenstand der vorliegenden Erfindung ist daher funktionalisiertes isotaktisches Polystyrol, das an mindestens einem Kettenende mit einer Gruppe ausgewählt aus den Gruppen IVa und IVb 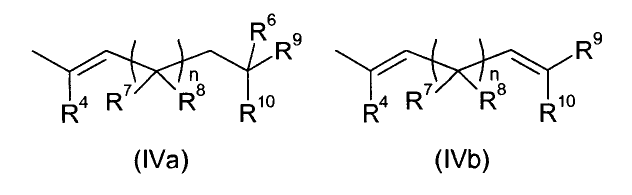 funktionalisiert ist,
worin bedeuten
- R³, R⁴, R⁵, R¹⁰, R⁷, R⁸: unabhängig voneinander H, (C₁-C₆)-Alkyl, bevorzugt H; (C₁-C₄)-Alkyl, be- sonders bevorzugt H, Methyl, ganz besonders bevorzugt H;
- R⁶: OH, Amino, Halogen oder Alylsilyl, bevorzugt OH, Halogen oder Alkylsilyl;
- n: 2 bis 10, bevorzugt 2 bis 8, besonders bevorzugt 4 bis 8;
herstellbar nach dem erfindungsgemäßen Verfahren.

Bevorzugte Reste R⁴, R⁶, R⁷, R⁸, R⁹ und R¹⁰ sowie bevorzugte Indizes n entsprechen den vorstehend bezüglich der Verbindungen der Formeln IIIa und IIIb genannten Resten und Indizes.

Bevorzugt ist ein Kettenende des isotaktischen Polystyrols mit einer Gruppe IVa oder IVb funktionalisiert.

Somit betrifft die vorliegende Erfindung in einer Ausführungsform funktionalisiertes isotaktisches Polystyrol, das durch Umsetzung mit funktionalisierten 1-Olefinen mit 5 bis 30 Kohlenstoffatomen herstellbar ist und an mindestens einem Kettenende mit einer Gruppe IVa funktionalisiert ist. Ganz besonders bevorzugte Gruppen IVa leiten sich von den ganz besonders bevorzugt eingesetzten funktionalisierten 1-Olefinen ab, z. B. Dec-1-en-10-ol, 10-Bromo-dec-1-en, 10-Chloro-dec-1-en, 10-Alkylsilyl-dec-1-en, Un-dec-1-en-11-ol, 11-Bromo-undec-1-en, 11-Chloro-undec-1-en oder 11-Alkylsilylundec-1-en.

In einer weiteren Ausführungsform betrifft die vorliegende Erfindung funktionalisiertes isotaktisches Polystyrol, das durch Umsetzung mit C₅-C₃₀-Dienen mit einer weiteren nicht konjugierten Doppelbindung herstellbar ist und an mindestens einem Kettenende mit einer Gruppe IVb funktionalisiert ist. Ganz besonders bevorzugte Gruppe IVb leiten sich von den ganz besonders bevorzugt eingesetzten Dienen 1,7-Octadien, 1,8-Nonadien, 1,9-Decadien, 1,10-Undecadien oder 1,11-Dodecadien ab.

Das erfindungsgemäße funktionalisierte isotaktische Polystyrol ist durch das Vorhandensein der mindestens einen Funktionalisierung dazu geeignet, mit Hilfe von polymeranalogen Reaktionen weiter funktionalisiert zu werden bzw. als Makromonomer, Makroinitiator oder als Kupplungsreagenz in weiteren Polymerisationsreaktionen zu dienen. Auf diese Weise sind neuartige Polymere wie stereoreguläre Blockcopolymere, Copolymere mit seitenständigen stereoregulären Polystyrolen sowie Blockcopolymere, die mittels Kupplungsreaktion hergestellt werden, z. B. Blockcopolymere mit Silikonsegmenten, zugänglich. Dabei stellt die Eigenschaft des isotaktischen Polystyrols, dass seine Kristallisation kinetisch stark gehemmt ist, die bisher im Stand der Technik als nachteilig angesehen wurde, einen Vorteil dar, da die weitere Umsetzung des funktionalisierten isotaktischen Polystyrols aufgrund seiner zum Beispiel im Vergleich zu syndiotaktischem Polystyrol besseren Löslichkeit (solange keine Kristallisation des isotaktischen Polystyrols eingetreten ist) erleichtert ist.

Bevorzugt weist das erfindungsgemäße funktionalisierte isotaktische Polystyrol eine Isospezifität von ≥ 94 %, bevorzugt ≥ 96 %, besonders bevorzugt ≥ 98 % auf. Die Ermittlung der Isospezifität erfolgt mittels ¹³C-NMR gemäß dem Fachmann bekannten Verfahren.

Das erfindungsgemäße funktionalisierte isotaktische Polystyrol weist im Allgemeinen eine Molekulargewichtsverteilung M_{w}/Mₙ von ≤ 3,1, bevorzugt ≤ 2,5, besonders bevorzugt ≤ 2,0, ganz besonders bevorzugt ≤ 1,8 auf.

Das Molekulargewicht der erfindungsgemäßen funktionalisierten isotaktischen Polystyrole (zahlenmittleres Molekulargewicht, Mₙ) ist abhängig von dem gewünschten Anwendungszweck und beträgt im Allgemeinen 2000 bis 900000 g/mol.

M_{w}/Mₙ und Mₙ werden mittels GPC-Messungen in Chloroform oder Trichlorbenzol ermittelt.

Durch die erfindungsgemäßen funktionalisierten isotaktischen Polystyrole werden Makromonomere, Makroinitiatoren, Kupplungsreagenzien sowie - bei weiterer Umsetzung der funktionalisierten isotaktischen Polystyrole - Block- und Pfropfcopolymere sowie anorganisch/organische Hybride mit stereoregulären, eng verteilten Polystyrolsegmenten bereitgestellt bzw. zugänglich.

Ein weiterer Gegenstand der vorliegenden Erfindung ist die Verwendung des erfindungsgemäßen funktionalisierten isotaktischen Polystyrols als Makromonomer. Des Weiteren sind weitere Funktionalisierungen, z. B. mindestens einer Doppelbindung des erfindungsgemäßen funktionalisierten isotaktischen Polystyrols möglich, so dass dieses zum Beispiel - nach polymeranaloger Halogenisierung - als Makroinitiator eingesetzt werden kann.

Im Folgenden sind bevorzugte weitere Funktionalisierungen des erfindungsgemäßen funktionalisierten isotaktischen Polystyrols beispielhaft genannt. Dem Fachmann ist bekannt, dass die folgenden weiteren Funktionalisierungen nur eine Auswahl aus zahlreichen weiteren Funktionalisierungen darstellen. Grundsätzlich können die erfindungsgemäßen funktionalisierten isotaktischen Polystyrole mit Hilfe aller dem Fachmann bekannten Verfahren weiter funktionalisiert werden. Durch die weitere Funktionalisierung sind neuartige (Co)Polymere, insbesondere Blockcopolymere, zugänglich, die z. B. zur Herstellung neuartiger Werkstoffe eingesetzt werden können.

### a) Polymeranaloge Halogenierung

Eine mögliche weitere Funktionalisierung ist die polymeranaloge Halogenierung des erfindungsgemäßen funktionalisierten isotaktischen Polystyrols. Grundsätzlich kann das erfindungsgemäße Polystyrol, das mindestens an einem Kettenende mit einer Gruppe IVa oder mit einer Gruppe IVb funktionalisiert ist, weiter funktionalisiert werden. Bevorzugt erfolgt eine weitere Funktionalisierung des erfindungsgemäßen Polystyrols mit einer Gruppe IVa an mindestens einem Kettenende. Besonders bevorzugt ist R⁶ in der Gruppe IVa in diesem Fall keine OH-Gruppe.

Ein weiterer Gegenstand der vorliegenden Erfindung ist somit ein Verfahren zur Herstellung eines Makroinitiators durch polymeranaloge Halogenierung des erfindungsgemäßen funktionalisierten isotaktischen Polystyrols.

Des Weiteren betrifft die vorliegende Erfindung einen Makroinitiator, herstellbar nach dem vorstehend genannten erfindungsgemäßen Halogenierungsverfahren und die Verwendung des erfindungsgemäßen Makroinitiators als Makroinitiator für die kontrollierte radikalische Polymerisation (ATRP).

Polymeranaloge Halogenierungen und geeignete Reaktionsbedingungen und Halogenierungsmittel sind dem Fachmann bekannt.

Bevorzugt wird erfindungsgemäß eine polymeranaloge Bromierung durchgeführt. Geeignete Bromierungsmittel und Reaktionsbedingungen sind dem Fachmann bekannt. Beispielsweise kann die Bromierung mit N-Brom-Succinimid als Bromierungsmittel in Anwesenheit eines radikalischen Initiators, z. B. AIBN, unter dem Fachmann bekannten Reaktionsbedingungen erfolgen. Nach Aufarbeitung der Reaktionsmischung gemäß dem Fachmann bekannten Verfahren wird ein bromiertes Derivat des erfindungsgemäßen Polystyrols erhalten, das z. B. als Makroinitiator in der kontrollierten radikalischen Polymerisation (ATRP) geeignet ist. Geeignete Copolymere für die ATRP sind z. B. Acrylate wie t-Butylacrylat, Methacrylate, Acrylsäure, Methacrylsäure, Styrol, Acrylnitril, Diene wie Butadien und andere üblicherweise in der radikalischen Polymerisation eingesetzte Monomere. Die Reaktionsbedingungen der ATRP sind dem Fachmann bekannt. Durch die ATRP unter Einsatz des halogenierten Derivats des erfindungsgemäßen Polystyrols als Makroinitiator sind z. B. neuartige stereoreguläre Diblockcopolymere zugänglich, wie in dem nachfolgenden Schema 1 beispielhaft dargestellt ist:

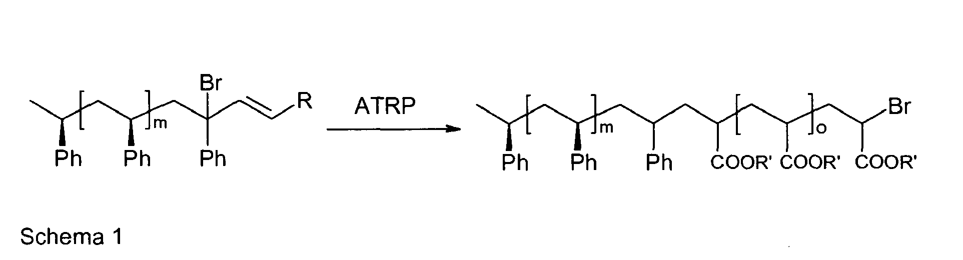

In Schema 1 haben die Indices und Reste die folgenden Bedeutungen:
- R: 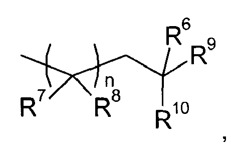 wobei die Reste und Indices R6, R7, R8, R9, R10 und n die bezüglich der Gruppe IVa genannten Bedeutungen aufweisen;
- R': t-Butyl oder H;
- m: Zahl der Wiederholungseinheiten auf Basis von Styrolmonomeren;
- o: Zahl der Wiederholungseinheiten auf Basis von t-Butylacrylat- oder Acrylsäure- monomeren.

### b) Verwendung als Makromonomere - Homopolymerisation oder Copolymerisation mit Olefinen

Das erfindungsgemäße funktionalisierte isotaktische Polystyrol kann in einer weiteren Ausführungsform der vorliegenden Erfindung als Makromonomer eingesetzt werden, wodurch ebenfalls neuartige (Co)Polymere zugänglich sind. Bevorzugt wird ein erfindungsgemäßes isotaktisches Polystyrol als Makromonomer eingesetzt, das mindestens an einem Kettenende mit einer Gruppe IVb funktionalisiert ist, d. h. das bevorzugt als Makromonomer eingesetzte erfindungsgemäße isotaktische Polystyrol ist vinylterminiert.

Ein weiterer Gegenstand der vorliegenden Erfindung ist daher die Verwendung des erfindungsgemäßen funktionalisierten isotaktischen Polystyrols, das an mindestens einem Kettenende eine Gruppe IVb aufweist, als vinyl-terminierte Makromonomere, bevorzugt in der Copolymerisation mit Olefinen.

Ein Beispiel für den Einsatz der erfindungsgemäßen vinyl-terminierten isotaktischen Polystyrole als Makromonomere ist die Homopolymerisation der Makromonomere oder die Copolymerisation mit Olefinen zur Herstellung von neuartigen Polyolefinen mit seitenständigen stereoregulären Polystyrolen. Geeignete Olefine sind z. B. Ethen, Propen oder weitere 1-Olefine wie 1-Hexen oder Styrol. Geeignete Reaktionsbedingungen und Katalysatoren für die Copolymerisation sind dem Fachmann bekannt.

### c) Kupplungsreaktionen

Des Weiteren können die erfindungsgemäßen vinyl-terminierten isotaktischen Polystyrole in Kupplungsreaktionen eingesetzt werden. Geeignete Kupplungsreaktionen sind z. B. Kupplungsreaktionen mit SiH-Gruppen. Die Reaktionspartner und Reaktionsbedingungen für solche Kupplungsreaktionen sind dem Fachmann bekannt. Durch Kupplungsreaktion des erfindungsgemäßen Makromonomers (das hier zur Kupplung eingesetzt wird) mit SiH-Gruppen sind z. B. Di- und Triblockcopolymere mit Siliconsegmenten - bei Einsatz von bifunktionellen Silikonen - zugänglich.

In dem nachfolgenden Schema 2 sind Beispiele gezeigt, worin das erfindungsgemäße vinyl-terminierte Polystyrol als Makromonomer zur Copolymerisation mit Olefinen oder in Kupplungsreaktionen mit Siliconen eingesetzt wird:

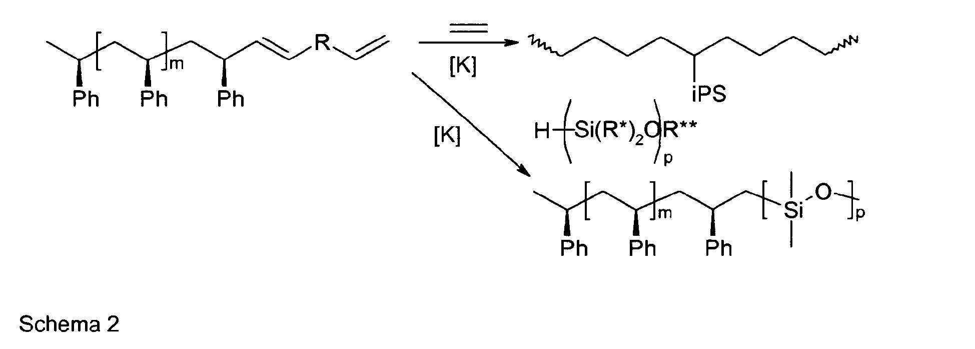

In Schema 2 bedeuten:
- [K]: Katalysator, wobei geeignete Katalysatoren dem Fachmann bekannt sind;
- m: Zahl der Wiederholungseinheiten auf Basis von Styrolmonomeren;
- R: 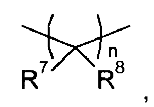 wobei die Reste und Indices R⁷ und R⁸ und n die bezüglich der Gruppe IVb genannten Bedeutungen aufweisen;
- R*, R**: C₁-C₆-Alkyl oder C₆-C₂₀-Aryl
- p: im Allgemeinen 5 bis 400.

### d) Epoxidierung

Die in dem erfindungsgemäßen funktionalisierten isotaktischen Polystyrol vorliegende(n) Doppelbindung(en) kann/können gemäß dem Fachmann bekannten Verfahren epoxidiert werden.

Ein weiterer Gegenstand der vorliegenden Erfindung ist somit ein Verfahren zur Epoxidierung des erfindungsgemäßen funktionalisierten isotaktischen Polystyrols durch Umsetzung mit einem Epoxidationsmittel, sowie ein epoxidiertes isotaktisches Polystyrol, herstellbar nach dem erfindungsgemäßen Verfahren.

Geeignete Epoxidationsmittel sind dem Fachmann bekannt. Beispiele für geeignete Epoxidationsmittel sind, z. B. H₂O₂, Persäuren und andere.

Durch Epoxidierung der Doppelbindung(en) werden diese für die Kupplung mit Nukleophilen wie z. B. Aminen, Carboxylaten oder Phenolaten zugänglich. Auf diese Weise sind zahlreiche neue stereoreguläre Blockcopolymere zugänglich.

Bevorzugt wird ein erfindungsgemäßes vinyl-terminiertes isotaktisches Polystyrol epoxidiert, d. h. ein erfindungsgemäßes isotaktisches Polystyrol, das mindestens an einem Kettenende eine Gruppe IVb aufweist.

In dem nachfolgenden Schema 3 sind ein epoxidiertes erfindungsgemäßes Polystyrol und eine nachfolgende Kupplung mit Nukleophilen beispielhaft dargestellt:

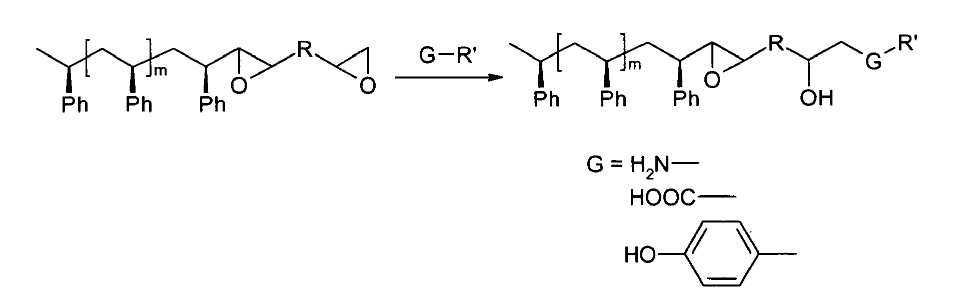

In Schema 3 bedeuten
- m: Zahl der Wiederholungseinheiten auf Basis von Styrolmonomeren;
- R: 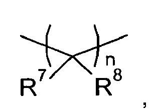 wobei die Reste und Indices R⁷ und R⁸ und n die bezüglich der Gruppe IVb genannten Bedeutungen aufweisen;
- R': funktionelle polare Einheit, z. B. Polyamide, PET, PEO, PPO oder Polyester.

### e) Einsatz in der ROMP und in der ADMET - Herstellung von weichen, thermoplastischen Elastomeren

Ein weiteres Beispiel für den Einsatz der erfindungsgemäßen vinyl-terminierten isotaktischen Polystyrole ist deren Einsatz in der ROMP von Cycloolefinen. Geeignete Cycloolefine sind z. B. Cyclooctadien, Norbonen, Dicyclopentadien sowie weitere dem Fachmann bekannte durch ROMP polymerisierbare Cycloolefine (weitere geeignete Cycloolefine sind nachstehend genannt). Geeignete Reaktionsbedingungen und Katalysatoren für die ROMP sind dem Fachmann bekannt. Durch dieses Verfahren (ROMP, ggf. mit nachgeschalteter Hydrierung gemäß dem Fachmann bekannten Verfahren) sind sowohl gesättigte als auch ungesättigte stereoreguläre Blockcopolymere zugänglich.

In dem nachfolgenden Schema 4 ist ein Beispiel für eine ROMP mit Cycloolefinen dargestellt.

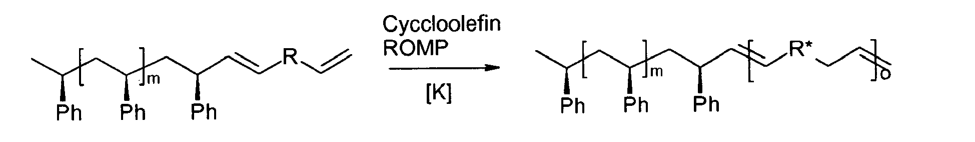

In Schema 4 bedeuten:
- m: Zahl der Wiederholungseinheiten auf Basis von Styrolmonomeren;
- R: 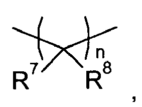 wobei die Reste und Indices R⁷ und R⁸ und n die bezüglich der Gruppe IVb genannten Bedeutungen aufweisen;
- [K]: geeigneter Katalysator, wobei geeignete Katalysatoren dem Fachmann bekannt (und nachstehend genannt) sind;
- o: Zahl der Wiederholungseinheiten auf Basis des in der ROMP eingesetzten Cycloolefins;
- R*: in dem in der ROMP eingesetzten Cycloolefin vorliegende Alkylengruppen.

In einer weiteren bevorzugten Ausführungsform wird das erfindungsgemäße funktionalisierte isotaktische Polystyrol in der Metathesepolymerisation mit endständige Doppelbindungen aufweisenden Polymeren eingesetzt. Dadurch ist es zum Beispiel möglich, neuartige Werkstoffe herzustellen, wie weiche, thermoplastische Elastomere (TPE), die eine hohe Wärmeformbeständigkeit aufweisen.

Ein weiterer Gegenstand der vorliegenden Erfindung ist daher ein Verfahren zur Herstellung von weichen, thermoplastischen Elastomeren umfassend den Schritt:

### ii) Metathesepolymerisation des erfindungsgemäßen funktionalisierten isotaktischen Polystyrols mit Verbindungen der allgemeinen Formel V:

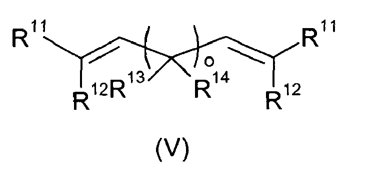

worin bedeuten:
- R¹¹, R¹², R¹³, R¹⁴: H, (C₁-C₆)-Alkyl, bevorzugt H, (C₁-C₄)-Alkyl, besonders bevorzugt H, Methyl, ganz besonders bevorzugt bedeuten R¹³ und R¹⁴ und mindestens jeweils ein Rest R¹¹ oder R¹² bzw. H und der jeweils andere Rest R¹¹ oder R¹² H oder Me- thyl, insbesondere ganz besonders bevorzugt sind R¹¹, R¹², R¹³, R¹⁴ H;
- o: 2 bis 10, bevorzugt 2 bis 8, besonders bevorzugt 4 bis 8, ganz besonders be- vorzugt 6;

in Anwesenheit eines Metathese-Katalysators.

Bevorzugt werden Verbindungen der Formel V in dem erfindungsgemäßen Metatheseverfahren eingesetzt, worin:
- R¹², R¹³, R¹⁴: H;
- R¹¹: H oder Methyl;
- o: 6 bedeuten.

Als Metathese-Katalysatoren sind alle dem Fachmann bekannten Metathese-Katalysatoren geeignet.

Bevorzugte in dem erfindungsgemäßen Metatheseverfahren eingesetzte Metathese-Katalysatoren sind die so genannten "Grubbs"-Katalysatoren, wobei es sich um Ruthenium-Carbenkomplexe handelt. Solche "Grubbs"-Katalysatoren sind dem Fachmann bekannt. Ein bevorzugt eingesetzter "Grubbs"-Katalysator weist zum Beispiel die folgende Formel auf:

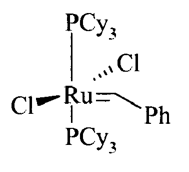

Neben dem vorstehend genannten Ruthenium-Carbenkatalysator sind dem Fachmann weitere Ruthenium-Carbenkomplexe als Katalysatoren bekannt, die ebenfalls in dem erfindungsgemäßen Metathese-Verfahren eingesetzt werden können. Neben Ruthenium-Carbenkomplexen, die neben Halogenid-Liganden und dem Carben Phosphanliganden tragen, können des Weiteren "Grubbs"-Katalysatoren der zweiten Generation eingesetzt werden, wie sie zum Beispiel in R. H. Grubbs, Handbook of Metathesis, Vol. 1, S. 128, Wiley-VCH, 2003 offenbart sind. Bei diesen "Grubbs"-Katalysatoren der zweiten Generation handelt es sich um Katalysatoren, die N-heterocyclische Carbenliganden neben oder anstelle der Phosphanliganden tragen. Beispiele für geeignete "Grubbs"-Katalysatoren der zweiten Generation sind im Folgenden dargestellt:

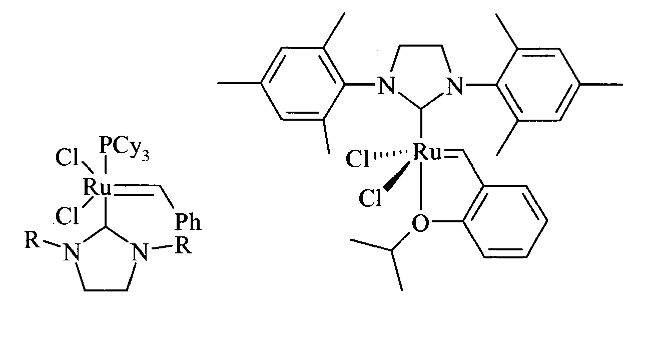

Diese vorstehend genannten Ruthenium-Carbenkomplexe stellen lediglich Beispiele für geeignete "Grubbs"-Katalysatoren dar. Weitere "Grubbs"-Katalysatoren sind dem Fachmann bekannt.

Die Verbindungen der allgemeinen Formel V können nach dem Fachmann bekannten Verfahren hergestellt werden. Ein geeignetes Verfahren zur Herstellung der Verbindungen der allgemeinen Formel V ist die Metathesepolymerisation von geeigneten offenkettigen oder cyclischen Monomeren.

Geeignete cyclische Monomere können in einer Ringöffnungsmetathese-Polymerisation (ROMP) zu den entsprechenden Verbindungen der allgemeinen Formel V umgesetzt werden, wobei Verbindungen der Formel V erhalten werden, worin R¹¹ H bedeutet.

Geeignete Monomere für die ROMP zur Herstellung der Verbindungen der Formel V weisen die allgemeine Formel VI auf: 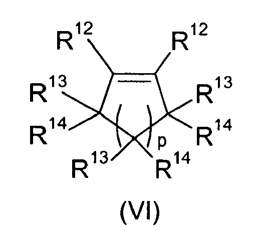 worin bedeuten:
- R¹², R¹³, R¹⁴: die bereits vorstehend bezüglich Formel V genannten Bedeutungen;
- p: 0 bis 8, bevorzugt 0 bis 6, besonders bevorzugt 2 bis 4, ganz besonders bevor- zugt 4.

Ganz besonders bevorzugt wird in der ROMP zur Herstellung von Verbindungen der allgemeinen Formel V ein Monomer der Formel VI eingesetzt, worin R¹², R¹³ und R¹⁴ H oder Methyl und p 4 bedeuten.

Geeignete Verfahrensbedingungen sowie Katalysatoren zur Durchführung der ROMP sind dem Fachmann bekannt. Üblicherweise werden so genannte "Grubbs"-Katalysatoren eingesetzt, wobei es sich um Ru-Carbenkomplexe handelt. Bevorzugt eingesetzte Katalysatoren sind die bereits bezüglich der Metathesepolymerisation des funktionalisierten isotaktischen Polystyrols mit den Verbindungen der Formel (IV) (Schritt ii)) vorstehend genannten Katalysatoren. Geeignete Verfahrensbedingungen zur Durchführung der ROMP sind dem Fachmann bekannt.

Des Weiteren können die Verbindungen der Formel V durch acyclische Dienmetathese-Polymerisation (ADMET) erhalten werden. Bei dieser Metathesepolymerisation werden offenkettige Diene mit endständigen olefinischen Doppelbindungen polymerisiert. Für die ADMET geeigneten Diene weisen zum Beispiel die allgemeine Formel VII auf 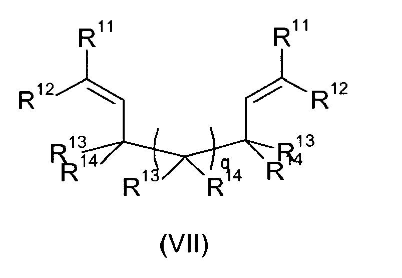 worin bedeuten:
- R¹¹_{,} R¹², R¹³, R¹⁴: die bezüglich Formel IV genannten Bedeutungen;
- q: 0 bis 8, bevorzugt 0 bis 6, besonders bevorzugt 2 bis 4, ganz besonders bevor- zugt 4.

Geeignete Reaktionsbedingungen und Katalysatoren zur Durchführung der ADMET sind dem Fachmann bekannt. Wie in der ROMP werden als Katalysatoren im Allgemeinen "Grubbs"-Katalysatoren eingesetzt. Bevorzugt eingesetzte Katalysatoren sind die bereits bezüglich der Metathesepolymerisation des funktionalisierten isotaktischen Polystyrols mit den Verbindungen der Formel (V) (Schritt ii)) vorstehend genannten Katalysatoren.

Die Herstellung von für die erfindungsgemäße Metathesepolymerisation geeigneten Verbindungen der Formel V ist am Beispiel einer bevorzugt eingesetzten Verbindung der Formel V dargestellt, wobei dieses Beispiel nicht einschränkend sein soll: 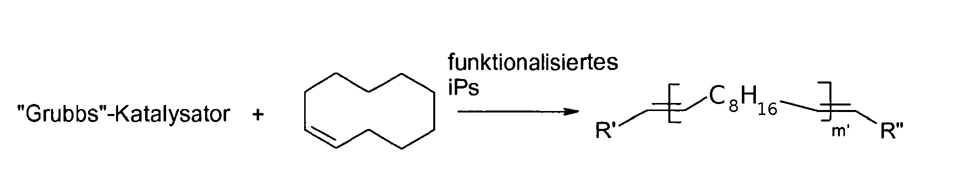 worin bedeuten:
"Grubbs"-Katalysator Ruthenium-Carbenkomplex, zum Beispiel 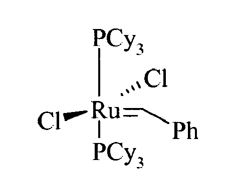
- R', R": H, Me oder funktionalisiertes iPs, wobei mindestens einer der Reste R' oder R" iPs ist;
- m': 10 bis 100

Die Menge des Metathese-Katalysators ist abhängig von der gewünschten Molmasse. Je höher die Katalysatormenge, desto niedriger ist grundsätzlich die Molmasse. Im Allgemeinen wird der Metathese-Katalysator wird in dem Verfahren gemäß Schritt (ii) in einer Menge von 10 µmol/l bis 10 mmol/l eingesetzt.

Das molare Verhältnis von funktionalisiertem, isotaktischem Polystyrol zu den Verbindungen der Formel V ist abhängig davon, welche Produkte mit Hilfe des Verfahrens gemäß Schritt (ii) hergestellt werden sollen. Wird ein Triblockcopolymer hergestellt, umfassend zwischen zwei Segmenten des isotaktischen Polystyrols (A) ein Segment basierend auf Verbindungen der Formel V (B) (Triblockcopolymer ABA), beträgt das molare Verhältnis von A zu B im Allgemeinen 1 : 5 bis 1 : 2000, bevorzugt 1 : 10 bis 1 : 1000, besonders bevorzugt 1 : 100 bis 1 : 500.

Die Durchführung der Metathesepolymerisation in Schritt (ii) erfolgt entsprechend dem Fachmann bekannten Metathesepolymerisationsverfahren. Die genaue Durchführung ist abhängig von dem gewünschten Produkt. Die Herstellung eines Triblockcopolymers ABA erfolgt bevorzugt unter den folgenden Reaktionsbedingungen:
Als Lösungsmittel werden bevorzugt aromatische Kohlenwasserstoffe wie Toluol oder halogenierte Kohlenwasserstoffe wie Methylenchlorid eingesetzt.

Die Reaktionstemperatur beträgt im Allgemeinen 20 bis 80 °C, bevorzugt 20 bis 60 °C, besonders bevorzugt 30 bis 50 °C.

Die Reaktionsdauer beträgt im Allgemeinen 0,5 bis 100 Stunden, bevorzugt 1 Stunde bis 48 Stunden, besonders bevorzugt 2 Stunden bis 30 Stunden. Dem Fachmann ist bekannt, dass auch kürzere oder längere Reaktionsdauern als die vorstehend genannten geeignet sind, wobei gegebenenfalls weniger Umsatz oder eine größere Menge an Nebenprodukten erhalten wird.

Die Aufarbeitung der Reaktionsmischung erfolgt gemäß dem Fachmann bekannten Verfahren, im Allgemeinen durch Deaktivierung, z. B. mit Ethylvinylether, Ausfällen und Abfiltrieren.

Das in der Metathesepolymerisation (Schritt (ii)) erhaltene Reaktionsprodukt ist ein Blockcopolymer, das Segmente aus stereoregulärem eng verteiltem isotaktischem Polystyrol aufweist sowie Segmente basierend auf den Verbindungen der allgemeinen Formel V (kautschukartige Segmente). In einer Ausführungsform wird nach der Metathesepolymerisation eine Teilhydrierung des erhaltenen Blockcopolymers durchgeführt. Geeignete Reaktionsbedingungen sind dem Fachmann bekannt.

Grundsätzlich sind - wie bereits vorstehend erwähnt - beliebige Blockcopolymere mit Hilfe des erfindungsgemäßen Verfahrens zugänglich. Bevorzugt wird ein Triblockcopolymer hergestellt, das zwischen zwei Segmenten aus stereoregulärem, eng verteiltem isotaktischem Polystyrol (A) ein Segment basierend auf den Verbindungen der Formel V (B) aufweist, das heißt ein Triblockcopolymer der Struktur ABA. Dieses Triblockcopolymer zeichnet sich dadurch aus, dass es sich um ein weiches, thermoplastisches elastomeres mit einer hohen Wärmeformbeständigkeit (TPE) handelt. Dabei handelt es sich um einen neuartigen Werkstoff, der die Eigenschaften von thermoplastischen Polymeren mit denen von Gummi kombiniert.

Da die Kristallisation von isotaktischem Polystyrol kinetisch gehemmt ist, folgt im Anschluss an die in Schritt (ii) beschriebene Metathesepolymerisation im Allgemeinen ein Kristallisationsschritt, worin das gewünschte Blockcopolymer auskristallisiert wird. Dieser Kristallisationsschritt wird im Allgemeinen durch Zugabe eines Nukleierungsmittels zu der in Schritt (ii) erhaltenen Reaktionsmischung durchgeführt. Geeignete Nukleirungsmittel sind die üblicherweise zur Kristallisation von isotaktischem Polystyrol eingesetzten Nukleierungsmittel. Bevorzugt wird als Nukleierungsmittel syndiotaktisches Polystyrol (sPS) eingesetzt, wobei auch andere in der Literatur beschriebene Nucleierungsmittel geeignet sind.

Im Allgemeinen wird das Nukleierungsmittel zu der in Schritt (ii) erhaltenen Reaktionsmischung in einer Menge von 0,1 bis 10 Gew.-%, bevorzugt 0,1 bis 5 Gew.-%, bezogen auf die eingesetzte Menge des isotaktischen Polystyrols, eingesetzt.

Ein weiterer Gegenstand der vorliegenden Erfindung ist ein Verfahren zur Herstellung von weichen thermoplastischen Elastomeren (TPE), umfassend die Schritte:
(i) Katalytische Polymerisation von Styrol in Anwesenheit mindestens eines isoselektiven metallorganischen Katalysators und mindestens eines Diens mit endständigen, nicht konjugierten Doppelbindungen der allgemeinen Formel IIIb, 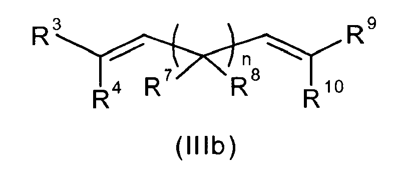 wobei funktionalisiertes isotaktisches Polystyrol, das an mindestens einem Kettenende eine olefinische Doppelbindung aufweist, erhalten wird;
(ii) Metathesepolymerisation des in Schritt (i) erhaltenen funktionalisierten isotaktischen Polystyrols mit Verbindungen der allgemeinen Formel V 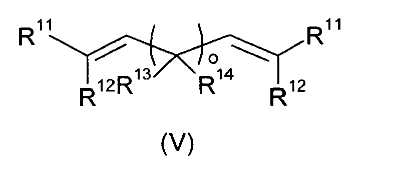 worin bedeuten:
   - R¹¹, R¹², R¹³, R¹⁴: H, (C₁-C₆)-Alkyl, bevorzugt H, (C₁-C₄)-Alky), besonders bevorzugt H, Methyl, ganz besonders bevorzugt bedeuten R¹², R¹³ und R¹⁴ H und R¹¹ H oder Methyl;
   - o: 2 bis 10, bevorzugt 2 bis 8, besonders bevorzugt 4 bis 8;
   in Anwesenheit eines Metathese-Katalysators;
(iii) Kristallisation des in Schritt (ii) erhaltenen Reaktionsproduktes durch Zugabe eines Nukleierungsmittels, bevorzugt durch Zugabe von syndiotaktischem Polystyrol (sPS).

Mit Hilfe des erfindungsgemäßen Verfahrens sind neuartige Werkstoffe zugänglich, die die Eigenschaften von thermoplastischen Polymeren mit denen von Gummi verknüpfen.
Ein weiterer Gegenstand der vorliegenden Erfindung sind daher thermoplastische Elastomere herstellbar nach dem erfindungsgemäßen Verfahren umfassend die Schritte (i), (ii) und (iii).

Die einzelnen Verfahrensbedingungen und bevorzugte Reaktionspartner in den Schritten (i), (ii) und (iii) wurden vorstehend genannt.

Die nachfolgenden Beispiele erläutern die Erfindung zusätzlich.

### Beispiele

### Darstellung von 1,9-Decadienyl-terminiertem isotaktischem Polystyrol

In einem 250 mL Schlenkkolben wurden 60 mL Toluol und 23 mL 1,9-Decadien vorgelegt. Danach wurde MAO (10 Gew.-% in Toluol) zugegeben (Al:Ti = 1500) und 5 min bei RT gerührt. Nun wurden 23 mL Styrol zugegeben und die Reaktionsmischung auf 40 °C erwärmt. Anschließend wurden 4,02 mg des Katalysators der Formel Ia (62,5 µmol/L) in 8 mL Toluol gelöst und durch Zugabe der Katalysatorlösung die Polymerisation gestartet. Es wurde 1 h bei 40°C polymerisiert. Die Reaktion wurde durch Fällen in MeOH/HCl abgebrochen. Das Polymer wurde filtriert, mehrmals mit Methanol gewaschen und im Hochvakuum bei 60 °C über Nacht getrocknet. Es wurden 10,3 g 1,9-Decadienyl-terminiertes isotaktisches Polystyrol erhalten.
Mₙ = 1900 g/mol, M_{w}/Mₙ = 1,3

### Katalysator:

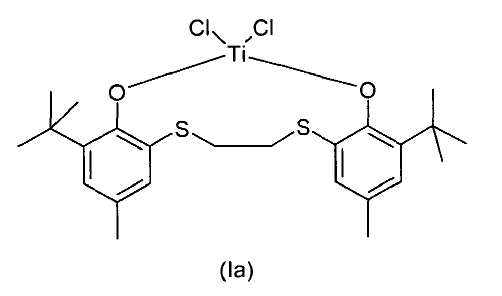

*¹H NMR-Spektrum von 1,9-Decadienyl-terminiertem isotaktischem Polystyrol:*
¹H NMR (300 MHz, CDCl₃, 300 K): δ = 7,25-6,50 (m, br, H ar.), 5,80 (m, -C*H*=CH₂), 5,12 (m, -CH=CH-), 4,97 (dd, -CH=CH₂), 2,48-1,95 (m, br, CH backbone), 1,95-0,65 (m, br, CH₂ backbone, alkyl).

¹³*C NMR-Spektrum von 1,9-Decadienyl-terminierlem isotaktischem Polystyrol.*
¹³C NMR (75 MHz, CDCl₃, 300 K): δ = 146,3 *(ipso-C),* 139,2 (-CH=CH₂), 131,9 (-CH=CH-), 128,2, 127,4, 125,8, 114,1 (-CH=CH₂), 42,9 (CH₂ backbone), 40,5 (CH backbone), 39,0, 36,6 (CH₃-CHPh-), 33,8, 32,3, 29,1, 20,8 (CH₃-CHPh-).

### Ringöffnende Metathesepolymerisation von Cycloocten mit 1,9-Decadienylterminiertem iPS als Regler

### Allgemeine Arbeitsvorschrift:

In einem Schlenkkolben wird 1,9-Decadienyl-terminiertes iPS (Mₙ = 2000 g/mol) vorgelegt und in Toluol gelöst. Zur Lösung wird Cycloocten (COE) (c = 0,2 mol/L) gegeben. Der Katalysator der Formel VIII wird in Toluol gelöst und in den Reaktionskolben überführt. Dann wird die Reaktionsmischung auf 55 °C erhitzt und 24 h unter Argon gerührt. Die Reaktion wird durch Zugabe von Ethylvinylether abgebrochen. Nach Zugabe von BHT wird das Polymer durch Fällen in Methanol erhalten. Das Polymer wird abfiltriert, mehrmals mit Methanol gewaschen und im Hochvakuum bei 60 °C über Nacht getrocknet.

### Katalysator:

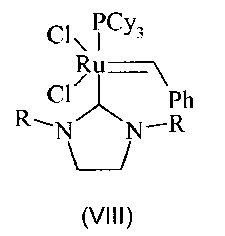

R bedeutet jeweils Mesityl.

**Tabelle 1. Reaktionsparameter der Ringöffnende Metathesepolymerisation von Cycloocten mit 1,9-Decadienyl-terminiertem iPS als Regler**

| Nr. | [COE]/[iPS] | [COE]/[Kat] | [g] | V (COE) [mL] | Auswage [g] | Ausbeute [%] | Styrol/COE (aus NMR) |
|---|---|---|---|---|---|---|---|
| 1 | 20 | 4000 | 0,20 | 0,26 | 0,14 | 33 | 1:1,9 |
| 2 | 50 | 4000 | 0,15 | 0,50 | 0,38 | 25 | 1 : 2,6 |
| 3 | 100 | 4000 | 0,073 | 0,5 | 0,25 | 51 | 1 : 4,3 |
| 4 | 500 | 4000 | 0,08 | 2,6 | 1,68 | 56 | 1 : 9 |
| 5 | 1000 | 4000 | 0,07 | 4,6 | 2,11 | 54 | 1 : 31 |
| 6 | 100 | 500 | 0,10 | 0,65 | | | |
| 7 | 100 | 2000 | 0,10 | 0,65 | 0,53 | 82 | 1 : 9 |
| 8 | 100 | 8000 | 0,10 | 0,65 | 0,22 | 34 | 1 : 5,4 |

*1H NMR-Spektrum PCOE*/*1,9-Decadienyl-terminiertes iPS.*
¹H NMR (300 MHz, CDCl₃, 300 K): δ = 7,25-6,50 (m, br, H arom.), 5,80 (m, -CH=CH₂), 5,41 (m, br, -CH=CH- PCOE), 5,03 (m, -CH=CH-, -CH=CH₂ iPS), 2,02 (m, br, =CH-CH-), 1,41 (m, br, =CH-CH₂-CH₂-CH₂-), 2,5 - 0,75 (m, br, backbone iPS).

*13C NMR-Spektrum PCOE*/*1,9-Decadienyl-terminiertes iPS*
¹³C NMR (75 MHz, CDCl₃, 300 K): δ = 146,3 *(ipso-C),* 139,2 (-CH=CH₂ iPS), 130,4 *(trans*-CH=CH- PCOE), 129,9 (cis-CH=CH- PCOE), 128,2, 127,4, 125,8, 114,1 (-CH=CH₂ iPS), 42,9 (CH₂ backbone iPS), 40,5 (CH backbone iPS), 35,6, 32,6 *(trans-CH₂-CH=* PCOE), 29,7 (CH₂ PCOE), 29,1 (CH₂ PCOE), 27,2 *(cis-CH₂-CH*= PCOE).

### Epoxidierung von 1,9-Decadienyl-terminiertem iPS

In einem 250 mL Rundkolben wurden 3,0 g 1,9-Decadienyl-terminiertes iPS (Mₙ = 2000 g/mol, 1,5 mmol) vorgelegt und in 100 mL Chloroform gelöst. 0,925 g MCPBA (techn. 70-%, 3,75 mmol) wurden in 20 mL Chloroform gelöst und langsam zur Polymerlösung getropft. Die Reaktionsmischung wurde bei Raumtemperatur über Nacht unter Argon gerührt. Es wurden 50 mL gesättigte Na₂CO₃-Lösung zugegeben und die Phasen getrennt. Die organische Phase wurde mit destilliertem Wasser (2 mal 50 mL) und gesättigter NaCl-Lösung (50 mL) gewaschen und das Lösemittel im Vakuum entfernt. Der Rückstand wurde mit 20 mL Toluol aufgenommen und in Methanol gefällt. Das Polymer wurde abfiltriert, mehrmals mit Methanol gewaschen und im Hochvakuum bei 60 °C über Nacht getrocknet. Es wurden 2,65 g Polymer erhalten.

*¹H NMR-Spektrum von epoxidiertem iPS-Decadienyl*
¹H NMR (300 MHz, CDCl₃, 300 K): δ = 7,25-6,50 (m, br, H ar.), 5,80 (m, - CH=CH₂), 4,97 (dd, -CH=CH₂), 3,90 - 3,38 (m, Diol-CH), 2,79 (m, CH), 2,65 (m, CH), 2,36 (m, CH), 2,48-1,95 (m, br, CH backbone), 1,95-0,65 (m, br, CH₂ backbone, alkyl).

Ein Vergleich von Proben, die mit verschiedenen Äquivalenten MCPBA umgesetzt wurden, zeigt, dass zunächst die interne Doppelbindung epoxidiert wird. Es ist eine vollständige Epoxidierung der iPS-Proben möglich, wobei bei 5 eq MCPBA bereits etwas Öffnung zum Diol erfolgt.

¹³*C NMR Spektrum von epoxidiertem iPS-Decadienyl*
¹³C NMR (75 MHz, CDCl₃, 300 K): δ = 146,3 *(ipso-C),* 139,2 (-CH=CH₂), 131,9 (-CH=CH-), 128,2, 127,4, 125,8, 114,1 (-CH=CH₂), 71,4 (Diol-CH), 67,0 (Diol-CH), 59,6, 58,7, 57,4, 57,0 (CH internes Epoxid), 52,3 (CH, terminales Epoxid), 47,0 (CH₂, terminales Epoxid), 42,9 (CH₂ backbone), 40,5 (CH backbone), 39,0, 36,6 (CH₃-CHPh-), 32,3, 31,7, 29,1, 25,8, 20,8 (CH₃-CHPh-).

### Epoxidöffnung mit n-Octylamin

0,15 g epoxidiertes 1,9-Decadienyl-terminiertes iPS (Mn = 2000 g/mol, 0,075 mmol) wurden in einem Schlenkrohr vorgelegt und in 1 mL Chloroform gelöst. Dann wurden 1,23 mL n-Octylamin (7,5 mmol, 0,97 g) zugegeben und die Reaktionsmischung 7 Tage bei 45°C unter Argon gerührt. Die Reaktion wurde durch Fällen in Methanol abgebrochen. Das Polymer wurde abfiltriert, mehrmals mit Methanol gewaschen und im Hochvakuum bei 60 °C über Nacht getrocknet. Es wurden 0,13 g Polymer erhalten.

*¹H NMR-Spektrum nach Epoxid-Öffnung mit Octylamin*
¹H NMR (300 MHz, CDCl₃, 300 K): δ = 7,25-6,50 (m, br, H ar.), 5,80 (m, - CH=CH₂), 4,97 (dd, *-CH=CH₂),* 3,60 (m, Diol), 2,65 (m, NH-CH₂), 2,48-1,95 (m, br, CH backbone), 1,95-0,65 (m, br, CH₂ backbone, alkyl), 1,28 (m, Octyl-CH₂), 0,88 (t, *-CH₂CH₃)*.

Es wird vollständiger Umsatz aller terminaler Epoxidgruppen erzielt, wie an den charakteristischen Signalen des Octylamins (1,28 und 0,88 ppm) erkennbar ist.

*¹³C NMR Spektrum von iPS nach Epoxidöffnung mit Octylamin.*
¹³C NMR (75 MHz, CDCl₃, 300 K): δ = 146,3 *(ipso-C),* 139,2 (-CH=CH₂), 131,9 (-CH=CH-), 128,2, 127,4, 125,8, 114,1 (-CH=CH₂), 71,4 (Diol-CH), 67,0 (Diol-CH), 59,6, 58,7, 57,4, 57,0 (CH internes Epoxid), 52,3 (CH, terminales Epoxid), 40,5 (CH backbone), 39,0, 36,6 (CH₃-CHPh-), 32,3, 31,7, 29,1, 27,2, 26,4, 23,4, 22,6 (Octyl-CH₂), 20,8 (CH₃-CHPh-), 14,1 (Octyl-CH₃).

### Hydrosilylierung von 1,9-Decadienyl-terminiertem iPS mit Pentamethyldisiloxan

0,25 g 1,9-Decadienyl-terminiertes iPS (Mₙ ∼ 2000 g/mol, n = 0,125 mmol) wurden in einem Schlenkrohr vorgelegt und in 15 mL Toluol gelöst. Es wurden 0,25 mL

Pentamethyldisiloxan (0,125 mmol, 0,0185 g) zugegeben und die Reaktionsmischung auf 40 °C erwärmt. Dann wurden 0,28 µL Karstedt-Katalysator (PT(0)-1,3-divinyl-1,1,3,3 tetramethyldisiloxan) (3 Gew.-% in Xylol, 2,5-10⁻⁸ mol, I,9-10⁻⁶ mol/L) zugegeben und 1 h bei 40 °C gerührt. Die Reaktion wurde durch fällen in Methanol abgebrochen. Das Polymer wurde vom Methanol abgetrennt und in Dichlormethan aufgenommen. Nach entfernen des Lösemittels wurden 0,16 g iPS-PMDS erhalten.

*¹H NMR-Spektrum von iPS-PMDS*
¹H NMR (300 MHz, CDCl₃, 300 K): δ = 7,25-6,50 (m, br, H ar.), 5,80 (m, -CH=CH₂), 5,12 (m, -CH=CH-), 4,97, (dd, -CH=CH₂), 2,48-1,95 (m, br, CH backbone), 1,95-0,65 (m, br, CH₂ backbone, alkyl), 0,58 (m, -CH₂-Si(CH₃)₂-), 0,13 (m, Si(CH₃)₂, Si(CH₃)₃).

Aus den NMR-Spektren folgt ein Umsatz von ca. 0,8 terminalen Doppelbindungen des iPS mit PMDS. Charakteristisch ist darüber hinaus der neue Peak bei 0,58 ppm bei dem es sich um die Methylengruppe neben dem Disiloxan handelt.

*¹³C NMR-Spektrum von iPS-PMDS*
¹³C (75 MHz, CDCl₃, 300 K): δ = 146,3 *(ipso-C),* 139,2 (-CH=CH₂), 131,9 (-CH=CH-), 128,2, 127,4, 125,8, 114,1 (-CH=CH₂), 42,9 (CH₂ backbone), 40,5 (CH backbone), 39,0, 36,6 (CH₃-CHPh-), 33,8, 32,3, 29,1, 23,3 (-CH₂-CH₂-Si(CH₃)₂-), 20,8 (CH₃-CHPh-), 18,4 (CH₂-CH₂-Si(CH₃)₂-), 2,0 (CH₃-Si), 0,4 (CH₃-Si).

### Hydrosilylierung von 1,9-Decadienyl-terminiertem iPS mit Di-H-terminiertem Poly(dimethylsiloxan)

0,50 g Decadienyl-terminiertes iPS (Mₙ ∼ 2000 g/mol, 0,25 mmol) wurden in einem Schlenkrohr vorgelegt und in 10 mL Toluol gelöst. Es wurden 0,06 mL Di-H-PDMS (M = 400 - 500 g/mol, 0,125 mmol, 0,056 g) zugegeben und die Reaktionsmischung auf 40 °C erwärmt. Dann wurden 0,55 µL Karstedt-Katalysator (3 Gew.-% in Xylol, 4,9-10⁻⁸ mol, 4,9-10⁻⁶ mol/L) zugegeben und 2 h bei 40 °C gerührt. Die Reaktion wurde durch fällen in Methanol abgebrochen. Das Polymer wurde abfiltriert, mehrmals mit Methanol gewaschen und im Hochvakuum bei 60 °C über Nacht getrocknet. Es wurden 0,45 g Polymer erhalten.

*¹H NMR-Spektrum von iPS-PDMS-iPS*
¹H NMR (300 MHz, CDCl₃, 300 K): δ = 7,25-6,50 (m, br, H ar.), 5,80 (m, -CH=CH₂), 5,12 (m, -CH=CH-), 4,97 (dd, -CH=CH₂), 2,48-1,95 (m, br, CH backbone), 1,95-0,65 (m, br, CH₂ backbone, alkyl), 0,60 (m, -CH₂-Si(CH₃)₂-), 0,13 (m, Si(CH₃)₂).

Ein Vergleich von Edukt- und Produktspektrum zeigt den Umsatz einer terminalen Doppelbindung pro iPS-Kette. Darüber hinaus erscheint ein neues Signal bei 0,60 ppm mit dem Integral 2H, welches der Methylengruppe neben dem PDMS-Block zugeordnet werden kann. Da iPS und PDMS im Verhältnis 2:1 eingesetzt wurden und keine terminalen H-Atome des PDMS-Blocks mehr vorhanden sind kann von der Bildung eines iPS-PDMS-iPS-Triblockcopolymers ausgegangen werden.

*¹³C NMR-Spektrum von iPS-PDMS-iPS*
¹³C (75 MHz, CDCl₃, 300 K): δ = 146,3 *(ipso-C),* 139,2 (-CH=CH₂), 131,9 (-CH=CH-), 128,2, 127,4, 125,8, 114,1 (-CH=CH₂), 42,9 (CH₂ backbone), 40,5 (CH backbone), 39,0, 36,6 (CH₃-CHPh-), 33,8, 32,3, 29,1, 23,2 (-CH₂-CH₂-Si(CH₃)2-), 20,8 (CH₃-CHPh-), 18,3 (CH₂-CH₂-Si(CH₃)₂-), 1,1 (CH₃-Si), 0,2 (CH₃-Si).

## Patentansprüche

1. Verfahren zur Herstellung von funktionalisiertem isotaktischen Polystyrol umfassend den Schritt:
(i) katalytische Polymerisation von Styrol in Anwesenheit mindestens eines isoselektiven metallorganischen Katalysators und mindestens eines C₅-C₃₀-Olefins, das neben der Doppelbindung eine weitere Funktionalisierung aufweist.

2. Verfahren nach Anspruch 1, **dadurch gekennzeichnet, dass** die weitere Funktionalisierung eine weitere Doppelbindung ist, die nicht mit der in dem C₅- bis C₃₀-Olefin vorhandenen Doppelbindung konjugiert ist, oder eine Gruppe ausgewählt aus OH-, Amino-, Halogen- und Alkylsilylgruppen.

3. Verfahren nach Anspruch 1 oder 2, **dadurch gekennzeichnet, dass** als Katalysator ein Katalysator der allgemeinen Formel I eingesetzt wird: 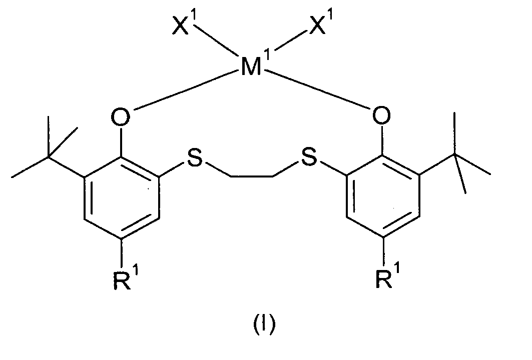 worin M¹, R¹, X¹, in der Formel I unabhängig voneinander bedeuten:
M¹ Ti, Zr, Hf, bevorzugt Ti;
R¹ (C₁-C₆)-Alkyl, O-(C₁-C₆)-Alkyl, bevorzugt (C₁-C₄)-Alkyl, O-(C₁-C₄)-Alkyl, be- sonders bevorzugt Methyl, t-Butyl, O-Methyl, ganz besonders bevorzugt Methyl, t-Butyl;
X¹ Halogen, O-(C₁-C₄)-Alkyl, Aralkyl, bevorzugt F, Cl, O(ⁱPr)₂, CH₂Ph, beson- ders bevorzugt Cl.

4. Verfahren nach einem der Ansprüche 1 bis 3, **dadurch gekennzeichnet, dass** das C₅-C₃₀-Olefin die folgenden allgemeinen Formeln IIIa oder IIIb aufweist 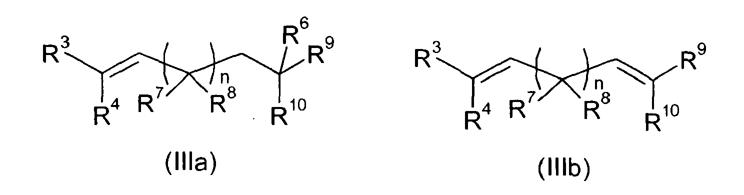 worin bedeuten:
R³, R⁴, R¹⁰, R⁷, R⁸, R⁹ H, (C₁-C₆)-Alkyl, bevorzugt H; (C₁-C₄)-Alkyl, besonders bevorzugt H, Me- thyl, ganz besonders bevorzugt H;
R⁶ OH, Amino, Halogen oder Alkylsilyl; bevorzugt OH, Halogen oder Alkylsilyl;
n 2 bis 10, bevorzugt 2 bis 8, besonders bevorzugt 4 bis 8.

5. Funktionalisiertes isotaktisches Polystyrol, das an mindestens einem Kettenende mit einer Gruppe ausgewählt aus den Gruppen IVa und IVb 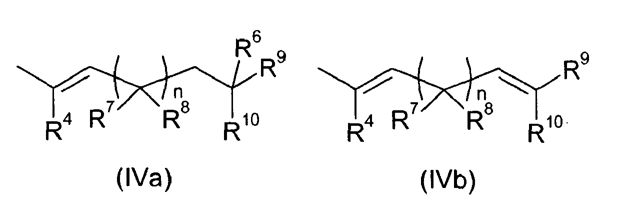 funktionalisiert ist,
worin bedeuten
R⁴, R¹⁰, R⁷, R⁸, R⁹ H, (C₁-C₆)-Alkyl, bevorzugt H; (C₁-C₄)-Alkyl, besonders bevorzugt H, Me- thyl, ganz besonders bevorzugt H;
R⁶ OH, Amino, Halogen oder Alkylsilyl, bevorzugt OH, Halogen oder Alkylsilyl;
n 2 bis 10, bevorzugt 2 bis 8, besonders bevorzugt 4 bis 8;
herstellbar nach Anspruch 4.

6. Funktionafisiertes isotaktisches Polystyrol nach Anspruch 5, **dadurch gekennzeichnet, dass** das Polystyrol eine Isospezifität von ≥ 94%, bevorzugt ≥ 96%, besonders bevorzugt ≥ 98% aufweist.

7. Funktionalisertes isotaktisches Polystyrol nach Anspruch 5 oder 6, **dadurch gekennzeichnet, dass** das Polystyrol eine Molekulargewichtsverteilung M_{w}/Mₙ von ≤ 3,1, bevorzugt ≤ 2,5, besonders bevorzugt ≤ 2,0, ganz besonders bevorzugt ≤ 1,8 aufweist.

8. Funküonalisiertes isotaktisches Polystyrol nach einem der Ansprüche 5 bis 7, **dadurch gekennzeichnet, dass** das Polystyrol ein zahlenmittleres Molekulargewicht Mₙ von 2000 bis 900.000 g/mol aufweist.

9. Verwendung von funktionalisiertem isotaktischem Polystyrol nach einem der Ansprüche 5 bis 8 als Makromonomer.

10. Verfahren zur Herstellung eines Makroinitiators durch polymeranaloge Halogenierung des funktionalisierten isotaktischen Polystyrols gemäß einem der Ansprüche 5 bis 8.

11. Makroinitiator, herstellbar nach einem Verfahren gemäß Anspruch 10.

12. Verwendung des Makroinitiators gemäß Anspruch 11 als Makroinitiator für die kontrollierte radikalische Polymerisation.

13. Verwendung des funktionalisierten isotaktischen Polystyrols gemäß einem der Ansprüche 5 bis 8, das an mindestens einem Kettenende eine Gruppe IVb aufweist, als vinyl-terminierte Makromonomere, bevorzugt in der Copolymerisation mit Olefinen, der ROMP mit Cycloolefinen oder zur Kupplung mit Silikonsegmenten.

14. Verfahren zur Epoxidierung des funktionalisierten isotaktischen Polystyrols gemäß einem der Ansprüche 5 bis 8 durch Umsetzung mit einem Epoxidationsmittel.

15. Epoxidiertes isotaktisches Polystyrol, herstellbar nach einem Verfahren gemäß Anspruch 14.

16. Verfahren zur Herstellung von weichen thermoplastischen Elastomeren umfassend den Schritt:
(ii) Metathese-Poiymerisation von funktionalisiertem isotaktischem Polystyrol nach einem der Ansprüche 5 bis 8, wobei das mindestens eine Kettenende mit einer Gruppe IVb substituiert ist, mit Verbindungen der allgemeinen Formel V 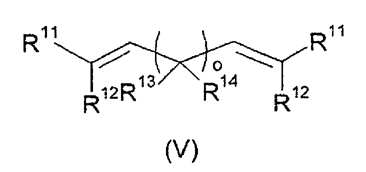 worin bedeuten:
R¹¹, R¹², R¹³, R¹⁴ H, (C₁-C₆)-Alkyl, bevorzugt H, (C₁-C₄)-Alkyl, besonders bevorzugt H, Me- thyl, ganz besonders bevorzugt bedeuten R¹², R¹³, R¹⁴ H und R¹¹ jeweils H oder Methyl;
o 2 bis 10, bevorzugt 2 bis 8, besonders bevorzugt 4 bis 8;
in Anwesenheit eines Metathese-Katalysators.

17. Verfahren nach Anspruch 16, **dadurch gekennzeichnet, dass** die Reste und Gruppen in der Verbindung der Formel V die folgenden Bedeutungen aufweisen:
R¹², R¹³, R¹⁴ H
R¹¹ jeweils unabhängig voneinander H, Methyl;
o 6_{.}

18. Verfahren nach Anspruch 16 oder 17, **dadurch gekennzeichnet, dass** der Metathese-Katalysator ein Ruthenium-Carben-Komplex ist.

19. Verfahren nach einem der Ansprüche 16 bis 18, **dadurch gekennzeichnet, dass** im Anschluss an Schritt (ii) ein Nukleierungsmittel, bevorzugt syndiotaktisches Polystyrol, zugegeben wird (Schritt (iii)).

20. Verfahren nach einem der Ansprüche 16 bis 19, **dadurch gekennzeichnet, daß** vor Schritt (ii) der Schritt (i) durchgeführt wird.
(i) katalytische Polymerisation von Styrol in Anwesenheit mindestens eines isoselektiven metallorganischen Katalysators und mindestens eines Diens mit endständigen, nicht konjugierten Doppelbindungen, wobei funktionalisiertes isotaktisches Polystrol, das mindestens an einem Kettenende eine Gruppe der Formel IVb aufweist, erhalten wird; 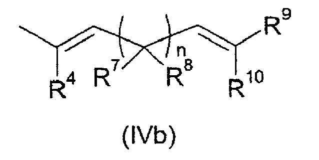 worin bedeuten
R⁴, R¹⁰, R⁷, R⁸, R⁹ H, (C₁-C₆)-Alkyl, bevorzugt H; (C₁-C₄)-Alkyl, besonders bevorzugt H, Me- thyl, ganz besonders bevorzugt H;
n 2 bis 10, bevorzugt 2 bis 8, besonders bevorzugt 4 bis 8.

21. Weiches thermoplastisches Elastomer herstellbar nach einem Verfahren gemäß einem der Ansprüche 16 bis 20.

## Claims

1. A process for preparing functionalized isotactic polystyrene, which comprises the step:
(i) catalytic polymerization of styrene in the presence of at least one iso-selective metal-organic catalyst and at least one C₅-C₃₀-olefin which has a further function in addition to the double bond.

2. The process according to claim 1, wherein the further function is a further double bond which is not conjugated with the double bond present in the C₅-C₃₀-olefin or a group selected from among OH, amino, halogen and alkylsilyl groups.

3. The process according to claim 1 or 2, wherein a catalyst of the general formula I: 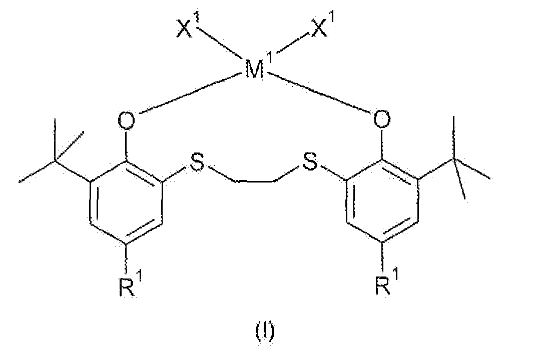 where M¹, R¹, X¹ in the formula I have, independently of one another, the following meanings:
M¹ is Ti, Zr, Hf, preferably Ti;
R¹ is (C₁-C₆)-alkyl, O-(C₁-C₆)-alkyl, preferably (C₁-C₄)-alkyl, O-(C₁-C₄)- alkyl, particularly preferably methyl, t-butyl, O-methyl, very particularly preferably methyl, t-butyl;
X¹ is halogen, O-(C₁-C₄)-alkyl, aralkyl, preferably F, Cl, O(ⁱPr)₂, CH₂Ph, particularly preferably Cl,
is used as catalyst.

4. The process according to any of claims 1 to 3, wherein the C₅-C₃₀-olefin has the general formula IIIa or IIIb 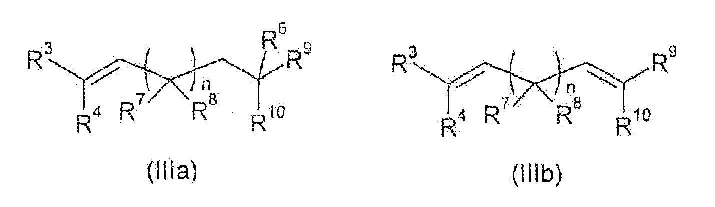 where:
R³, R⁴, R¹⁰, R⁷, R⁸, R⁹ are each H, (C₁-C₆)-alkyl, preferably H, (C₁-C₄)-alkyl, particularly preferably H, methyl, very particularly preferably H;
R⁶ is OH, amino, halogen or alkylsilyl, preferably OH, halogen or alkylsilyl,
n is from 2 to 10, preferably from 2 to 8, particularly preferably from 4 to 8.

5. A functionalized isotactic polystyrene which is functionalized at at least one chain end by a group selected from among the groups IVa and IVb 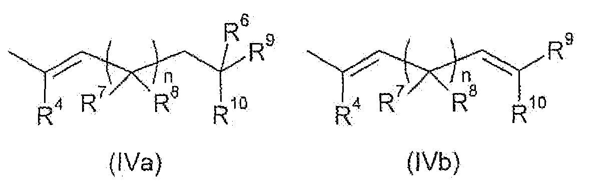 where
R⁴, R¹⁰, R⁷, R⁸, R⁹ are each H, (C₁-C₆)-alkyl, preferably H; (C₁-C₄)-alkyl, particularly preferably H, methyl, very particularly preferably H;
R⁶ is OH, amino, halogen or alkylsilyl, preferably OH, halogen or alkylsilyl;
n is from 2 to 10, preferably from 2 to 8, particularly preferably from 4 to 8;
and can be prepared according to claim 4.

6. The functionalized isotactic polystyrene according to claim 5 which has an iso-specificity of ≥ 94%, preferably ≥ 96%, particularly preferably ≥ 98%.

7. The functionalized isotactic polystyrene according to claim 5 or 6 which has a molecular weight distribution M_{w}/Mₙ of ≤ 3.1, preferably ≤ 2.5, particularly preferably ≤ 2.0, very particularly preferably ≤ 1.8.

8. The functionalized isotactic polystyrene according to any of claims 5 to 7 which has a number average molecular weight Mₙ of from 2000 to 900 000 g/mol.

9. The use of functionalized isotactic polystyrene according to any of claims 5 to 8 as macromonomer.

10. A process for preparing a macroinitiator by polymer-analogous halogenation of the functionalized isotactic polystyrene according to any of claims 5 to 8.

11. A macroinitiator which can be prepared by a process according to claim 10.

12. The use of the macroinitiator according to claim 11 as macroinitiator for controlled free-radical polymerization.

13. The use of the functionalized isotactic polystyrene according to any of claims 5 to 8 which has a group IVb at at least one chain end as vinyl-terminated macromonomer, preferably in copolymerization with olefins, ROMP with cycloolefins or for coupling with silicone segments.

14. A process for epoxidizing the functionalized isotactic polystyrene according to any of claims 5 to 8 by reaction with an epoxidizing agent.

15. An epoxidized isotactic polystyrene which can be prepared by a process according to claim 14.

16. A process for preparing soft thermoplastic elastomers, which comprises the step:
(ii) metathesis polymerization of functionalized isotactic polystyrene is according to any of claims 5 to 8 in which at least one chain end is substituted by a group IVb with compounds of the general formula V 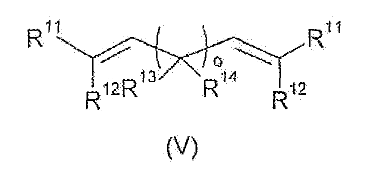 where:
R¹¹, R¹², R¹³, R¹⁴ are each H, (C₁-C₆)-alkyl, preferably H, (C₁-C₄)-alkyl, particularly preferably H, methyl, with very particular preference being given to R¹², R¹³, R¹⁴ each being H and R¹¹ being H or methyl in each case;
o is from 2 to 10, preferably from 2 to 8, particularly preferably from 4 to 8;
in the presence of a metathesis catalyst.

17. The process according to claim 16, wherein the radicals and groups in the compound of the formula V have the following meanings:
R¹², R¹³, R¹⁴ are each H;
the radicals R¹¹ are each, independently of one another, H, methyl;
o is 6.

18. The process according to claim 16 or 17, wherein the metathesis catalyst is a ruthenium-carbene complex.

19. The process according to any of claims 16 to 18, wherein a nucleating agent, preferably syndiotactic polystyrene, is added (step (iii)) after step (ii).

20. The process according to any of claims 16 to 19, wherein step (i) is carried out before step (ii)
(i) catalytic polymerization of styrene in the presence of at least one iso-selective metal-organic catalyst and at least one diene having terminal, nonconjugated double bonds to give functionalized isotactic polystyrene which has a group of the formula IVb at at least one chain end; 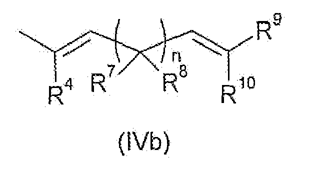 where
R⁴, R¹⁰, R⁷, R⁸, R⁹ are each H, (C₁-C₆)-alkyl, preferably H; (C₁-C₄)-alkyl, particularly preferably H, methyl, very particularly preferably H;
n is from 2 to 10, preferably from 2 to 8, particularly preferably from 4 to 8.

21. A soft thermoplastic elastomer which can be prepared by a process according to any of claims 16 to 20.

## Revendications

1. Procédé pour la préparation de polystyrène isotactique fonctionnalisé, comprenait l'étape :
(i) polymérisation catalytique de styrène en présence d'au moins un catalyseur organométallique iso-sélectif et d'au moins une oléfine en C₅-C₃₀, qui en plus de la double liaison comporte une autre fonctionnalisation.

2. Procédé selon à revendication 1, **caractérisé en ce que** l'autre fonctionnalisation est une autre double liaison, qui n'est pas conjuguée avec la double liaison présente dans l'oléfine en C₅-C₃₀, ou un groupe choisi parmi les groupes OH, amino, halogéno et alkylsilyle.

3. Procédé selon la revendication 1 ou 2, **caractérise en ce qu**'on utilise comme catalyseur un catalyseur de formule générale I 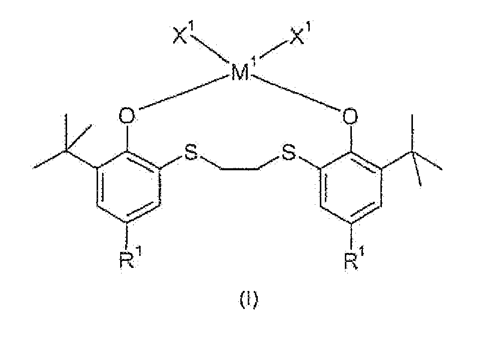 où M¹, R¹, X¹ dans la formule I représentent, chacun indépendamment :
M¹ Ti, Zr, Hf, de préférence Ti ;
R¹ un groupe alkyle en C₁-C₆, O-alkyle (C₁-C₆), de préférence alkyle en C₁-C₄, O-alkyle(C₁-C₄), de façon particulièrement préférée méthyle, tert- butyle, O-méthyle, de façon tout particulièrement préférée méthyle, tert-butyle ;
X¹ un atome d'halogène, un groupe O-alkyle(C₁-C₄), aralkyle, de préférence F, Cl, O(ⁱPr)₂, CH₂Ph, de façon particulièrement préférée Cl.

4. Procédé selon l'une quelconque des revendications 1 à 3, **caractérisé en ce que** l'oléfine en C₅-C₃₀ présente la formule générale IIIa ou IIIb suivante 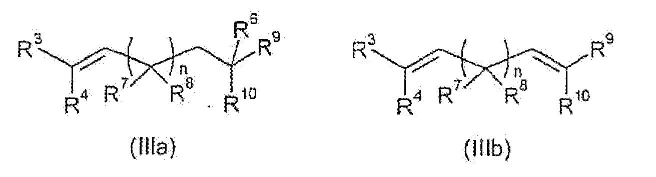 où :
R³, R⁴, R¹⁰, R⁷, R⁸, R⁹ représentent H, un groupe alkyle en C₁-C₆, de préférence H ; un groupe alkyle en C₁-C₄, de façon particulièrement préférée H, méthyle, de façon tout particulièrement préférée H ;
R⁶ représente un groupe OH, amino, halogéno ou alkylsilyle ; de préférence OH, halogéno ou alkylsilyle ;
n vaut de 2 à 10, de préférence de 2 à 8, de façon particulièrement préférée de 4 à 8.

5. Polystyrène isotactique fonctionnalisé, qui est fonctionnalisé à au moines une extrémité de chaîne par und groupe choisi parmi les groupes IVa et IVb 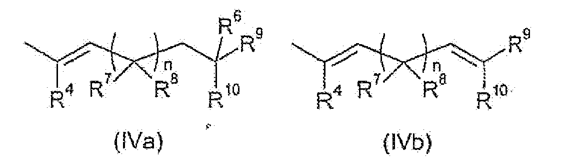 où :
R⁴, R¹⁰, R⁷, R⁸, R⁹ représentent H, un groupe alkyle en C₁-C₆, de préférence H ; un groupe alkyle en C₁-C₄, de façon particulièrement préférée H, méthyle, de façon tout particulièrement préférée H ;
R⁶ représente un groupe OH, amino, halogéno ou alkylsilyle ; de préférence OH, halogéno ou alkylsilyle ;
n vaut de 2 à 10, de préférence de 2 à 8, de façon particulièrement préférée de 4 à 8 ;
pouvant être préparé selon la revendication 4.

6. Polystyrène isotactique fonctionnalisé, selon la revendication 5, **caractérisé en ce que** le polystyrène présente une iso-spécificité de ≥ 94 %, de préférence de ≥ 96 %, de façon particulièrement préférée de ≥ 98 %.

7. Polystyrène isotactique fonctionnalisé, selon la revendication 5 ou 6, **caractérisé en ce que** le polystyrène présente une distribution de masse moléculaire M_{w}/Mₙ de ≤ 3,1, de préférence ≤ 2,5, de façon particulièrement préférée ≤ 2,0, de façon tout particulièrement préférée ≤ 1,8.

8. Polystyrène isotactique fonctionnalisé, selon l'une quelconque des revendications 5 à 7, **caractérisé en ce que** le polystyrène présente une masse moléculaire moyenne en nombre Mₙ de 2 000 à 900 000 g/mole.

9. Utilisation d'un polystyrène isotactique fonctionnalisé, selon l'une quelconque des revendications 5 à 8, en tant que macromonomère.

10. Procédé pour la préparation d'un macro-amorceur par halogénation, conduisant à un analogue polymère, du polystyrène isotactique fonctionnalisé, selon l'une quelconque des revendications 5 à 8.

11. Macro-amorceur, pouvant être préparé conformément à un procédé selon la revendication 10.

12. Utilisation du macro-amorceur selon la revendication 11, en tant que macro-amorceur pour la polymérisation radicalaire régulée.

13. Utilisation du polystyrène isotactique fonctionnalisé, selon l'une quelconque des revendications 5 à 8, qui comporte un groupe IVb à au moins une extrémité de chaîne, en tant que macromonomère à terminaison vinyle, de préférence dans la copolymérisation avec des oléfines, la ROMP (polymérisation par métathèse avec ouverture de cycle) avec des cyclo-oléfines ou pour le couplage avec des segments silicone.

14. Procédé pour l'époxydation du polystyrène isotactique fonctionnalisé, selon l'une quelconque des revendications 5 à 8, par mise en réaction avec un agent d'époxydation.

15. Polystyrène isotactique époxydé, pouvant être préparé conformément à un procédé selon la revendication 14.

16. Procédé pour la préparation d'élastomères thermoplastiques souples, comprenant l'étape :
(ii) polymérisation par métathèse de polystyrène isotactique fonctionnalisé, selon l'une quelconque des revendications 5 à 8, ladite au moins une extrémité de chaîne étant substituée par un groupe IVb, avec des composés de formule générale V 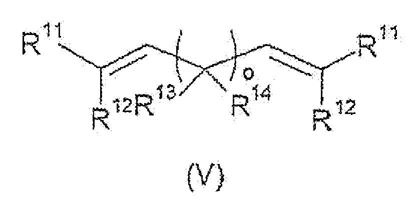 où :
R¹¹, R¹² R¹³, R¹⁴ représentent H, un groupe alkyle en C₁-C₆, de préférence H, un groupe alkyle en C₁-C₄, de façon particulièrement préférée H, méthyle, de façon tout particulièrement préférée R¹², R¹³, R¹⁴ représentent H et R¹¹ représente chaque fois H ou le groupe méthyle ;
o vaut de 2 à 10, de préférence de 2 à 8, de façon particulièrement préférée de 4 à 8 ;
en présence d'un catalyseur de métathèse.

17. Procédé selon la revendication 16, **caractérisé en ce que** les radicaux et les groupes dans le composé de formule V ont les significations suivantes :
R¹², R¹³, R¹⁴ représentent H
R¹¹ représente chaque fouis H, le groupe méthyle ;
o vaut 6.

18. Procédé selon la revendication 16 ou 17, **caractérisé en ce que** le catalyseur de métathèse est un complexe ruthénium-carbène.

19. Procédé selon l'une quelconque des revendications 16 à 18, **caractérisé en ce qu'**à la suite de l'étape (ii) on ajoute un agent de nucléation, de préférence un polystyrène isotactique [étape (iii)].

20. Procédé selon l'une quelconque des revendications 16 à 19, **caractérisé en ce qu'**avant l'étape (ii) on effectue l'étape (i)
(i) polymérisation catalytique de styrène en présente d'au moins un catalyseur organométallique iso-sélectif et d'au moins un diène à doubles liaisons terminales, non conjuguées, pour obtenir un polystyrène isotactique fonctionnalisé qui comporte au moins à une extrémité de chaîne un groupe de formule IVb : 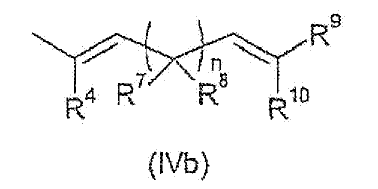 où :
R⁴, R¹⁰, R⁷, R⁸, R⁹ représentent H, un groupe alkyle en C₁-C₆, de préférence H ; un groupe alkyle en C₁-C₄, de façon particulièrement préférée H, méthyle, de façon tout particulièrement préférée H ;
n vaut de 2 à 10, de préférence de 2 à 8, de façon particulièrement préférée de 4 à 8.

21. Élastomère thermoplastique souple pouvant être préparé conformément à un procédé selon l'une quelconque des revendications 16 à 20.
